# EUROPEAN PATENT SPECIFICATION

(11) **EP 2 757 194 B1**
(45) Date of publication and mention of the grant of the patent: **10.05.2017**
(21) Application number: 14151062.8
(22) Date of filing: 14.01.2014
(51) Int. Cl.: D21J 7/00, D21J 5/00, B65D 43/02

(54) **Pulp moulded lid with non-reticulated inner and outer surfaces and process of manufacturing the same**
Zellstoffgeformter Deckel mit nicht vernetzten Innen- und Außenflächen und Verfahren zu seiner Herstellung
Couvercle moulé de pâte à papier avec les surfaces intérieure et extérieure non réticulées et son procédé de fabrication

(30) Priority: 16.01.2013 WO PCT/CN2013/070512; 16.08.2013 CN 201310359135
(43) Date of publication of application: 23.07.2014
(73) Proprietor: Wang, Gaoyuan, Wucheng District Jinhua Zhejiang (CN); Jia, Yingqi, Jinhua Zhejiang (CN)
(72) Inventor: Wang, Gaoyuan, Wucheng District Jinhua Zhejiang (CN); Jia, Yingqi, Jinhua Zhejiang (CN)
(74) Representative: Sun, Yiming

(56) References cited:
- EP-A1- 1 439 264
- WO-A1-2010/064899
- DE-U1-202008 012 116
- US-A- 2 879 935
- US-A1- 2006 180 646

## Description

### FIELD OF THE INVENTION

The invention is of pulp moulded cup lid manufactured with improved technology, and particularly, of the process of manufacturing the lid which has fine, smooth, non-reticulated inner and outer surfaces.

### BACKGROUND OF THE INVENTION

Pulp moulding is a three-dimensional papermaking technique in which pulp made from plant fibers is shaped in a mould by pulp moulding machines to produce paper products. WO 2010/064899 A1 discloses a pulp moulded cup lid and a method of manufacturing the same. Below is detailed in a first conventional process including the steps of distributing pulp made from plant fibers into a vacuum forming mould with a filtering screen and being shaped via adsorption moulding, wherein the mould, filtered pulp has a water percentage of 65 to 75 wt %; drying the pulp to reduce water content to 10-15 %, and, shaping the pulp in a thermoforming mould at a temperature of 160-180 °C through compression moulding to produce a finish product. In this process, shape of the product has been basically finalized at the stage of drying. The compression moulding leaves clear reticulated surfaces on both sides with coarse texture and a paper density of 0.35-0.40 g/cm³. Such process is generally applied to the packing materials which have cushioning and less aesthetic requirements.

Below is also detailed in a second conventional process including the steps of distributing pulp made from plant fibers into a vacuum forming mould equipped with a filter and being shaped via adsorption moulding, wherein the mould, filtered pulp has a water percentage of 65 to 75 wt %, and, pressing, drying, and moulding the pulp in a thermoforming mould with a metal filter to produce a finish paper product. The final product has a reticulated surface with coarse texture on one side and a smooth non-reticulated surface on the other side. It has a paper density of 0.60-0.65 g/cm³. Products made in such process are primarily used to pack food or as a cap for a container. However, because the side with reticulated surface has not been calendered. Subtle plant filbers (paper fibers) tend to separate out on the paper package.

The existing moulding processes of making pulp moulded cup lids also includes the steps of diluting the plant fibers to make pulp slurry, distributing the pulp, vacuum adsorption forming, drying, moulding and pressing under high temperature, cutting, punching, and sealing or forming annular groove on a skirt. The final product has also a reticulated surface with a coarse texture on one side and a smooth non-reticulated surface on the other side. It has a density of 0.60-0.65 g/cm³. The smooth non-reticulated side is usually used as outer surface of the lid for aesthetic purpose while the reticulated side with a coarse texture is used as inner surface. However, tiny fibers on the coarse inner surface may fall into the liquid content in the container and it is not acceptable to consumers. If, alternatively, the smooth, non-reticulated side is used as inner surface and the reticulated side as outer surface, its appearance is unaesthetic. High quality printed graphics cannot be printed on top of the coarse outer surface as an advertising medium. Furthermore, the tiny fibers could be in contact with the mouth of a consumer in drinking. This is not desired. Moreover, pulp moulded cup lid manufactured by the existing techniques, because of the process of forming with filtering screen, has a low density of 0.6∼0.65 g/cm³ which leads to a weak overall strength, weak structure, insufficient fastening force of the skirt of the lid upon the container. This very often leads to a bad sealing effect of the container. When containing hot beverage, the lid and the cup could be separated easily, resulting in a potential leaking of the hot beverage and causing dangerous of burning users. Meanwhile, lids made with the existing designs have low strength around the suction mouth of the lid. When a user taking beverage, the area of the suction mouth is easy to be impregnated by hot beverage, and, then softened and deformed under force of lips of the user.

### SUMMARY OF THE INVENTION

The object of the patent application is to provide a pulp moulded cup lid which has non-reticulated inner and outer surfaces, and, to provide a method of manufacturing the cup lids. The lids can satisfy the need of covering the cup tightly and achieve a good sealing effect.

According to one aspect of the patent application, a pulp moulded cup lid includes a lid body; a sealing skirt extending downward the lid body; a plurality of buckling projections disposed evenly and circumferentially on an outer surface of a lower portion of the skirt. The above described lid body has fine, smooth, non-reticulated inner and outer surfaces.

According to another aspect of the patent application, a method of manufacturing the lids including the following steps:
(1) diluting plant fibers in water to make pulp slurry;
(2) filling the pulp slurry into a forming mould with a filtering screen for vacuum adsorption moulding to become a blank, wherein the blank has a water content of 65-75 wt %;
(3) closing a transfer mould (plank punch) of temperature of 160-180°C and the forming mould with no pressure applied for 2-5 seconds; then, applying a pressure up to 27-40N/cm² on the blank for 8-20 seconds; when this step is completed, the blank has a total water content of 50-55 wt %, while a side contacting the filtering screen has a water content of 58-65 wt %; and
(4) moving The blank into a set of heat setting drying moulds with upper and lower moulds at temperature of 160-180°C; closing the two moulds together with no pressure applied for 2-8 seconds; then, applying a pressure up to 80-120N/cm² on the blank for 30-45 seconds. Cup lids manufactured through the method of this patent application has fine, smooth, non-reticulated inner and outer surfaces. No paper fibers separate from either the surface contacting liquid or the dispensing window contacting with user lips. Paper fibers of the cup lids bind tighter. The cup lids have a thickness of 0.50-0.60mm, and a high paper density of 0.77∼0.8g/cm³, which reinforce solidarity and strength of product body, especially the strength of bucking projections. The high density pulp moulded cup lids are not to be easily damped and deformed in an environment of high humidity.

### BRIEF DESCRIPTION OF THE DRAWINGS

FIG. 1 is a perspective view of a cup lid for a container according to a first embodiment of this invention;
FIG. 2 is a bottom view of the cup lid of this invention;
FIG. 3 is a sectional view of the cup lid of this invention;
FIG. 4 is a perspective view of the cup lid for a container according to a second embodiment of the present invention; and
FIG 5 is a schematic drawing of the moulds used in manufacturing the cup lids in this invention.

### DETAILED DESCRIPTION OF THE INVENTION

The following is the detailed description of the technique used in this invention.

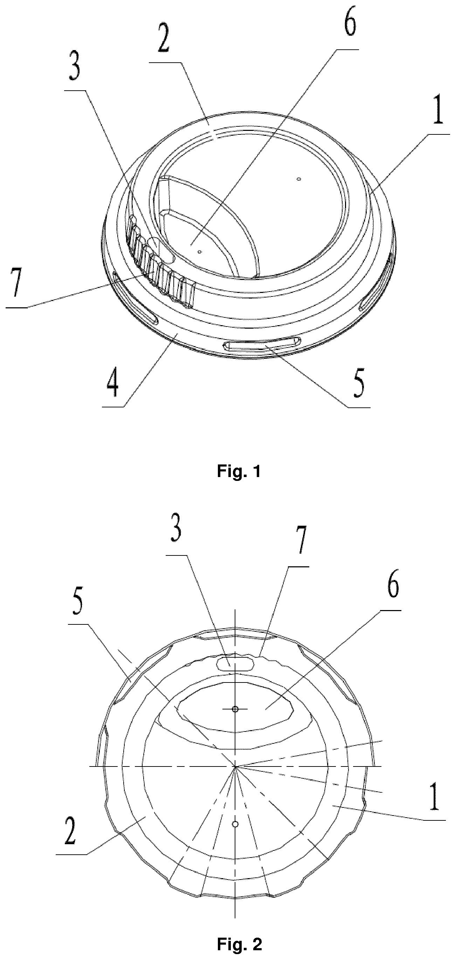

Referring to FIGS. 1 to 3, a pulp moulded cup lid with non-reticulated inner and outer surfaces in accordance with the invention is shown. Both surfaces are fine and smooth. The cup lid includes the following components as discussed in detail below.

The cup lid includes lid body 1 which has smooth non-reticulated inner and outer surfaces. There is a sealing skirt 4 formed at one end of the lid body 1 extending along the axial direction. A plurality of buckling projections 5 are formed on the inner surface of the skirt 4 and evenly distributed along the circumference. The projections 5 project inward with a height of 1.5-2.0 mm. When the lid is applied on a cup, the projections 5 clamp together with rim of the cup. An effective result can be achieved with 8 to 16 such projections. The projections 5 makes it easier to apply the lid to cover the opening of the cup and also easy to take the lid off the cup.

Existing techniques and processes tries to add a clamping function on pulp moulded products by pressing upwards to make a ring of rim and groove to achieve the effect of clamping to the rim at cup edge. This continuous deformation of the material damages combination strength between fibers along the circumference, and, therefore, leads to weak overall strength of the lid skirt. The lid fails to clamp on the cup tightly. It is impossible to lift a cup of full of beverage by only holding the cup lid covered on the cup. By contrast, in the present invention, elongated projections 5 evenly distributed along the circumference are functioned as buckles to maintain and reinforces the overall strength of the skirt 4.

On the outer periphery of the lid body 1, a convex platform 2 is set along the circumferential direction. A dispensing window 3 is opened on the convex platform 2. The dispensing window 3 is either open or provided with a clamshell type cover.

A concave groove 6 is formed on the lid body 1 adjacent to the dispensing window 3, which helps to expose the dispensing window 3 as a suction mouth. The provision of the concave groove 6 allows a user to easily drink the liquid stored in the container by placing his or her lips on both the dispensing window 3 and the concave groove 6 without relying on a straw. By changing the shape and size of the dispensing window 3, it can be adapted to suit different usages, i.e. inserting a straw or have user's mouth contact to the dispensing window directly.

On the lid body 1 of the above described lid, a plurality of reinforcing ribs 7 are formed on the outer surface of the dispensing window 3. They are used to increase the overall strength of the lid. Setting on the outer surface of the dispensing window, the ribs make the area around the dispensing window strong and stiff. This structure prevents the area from being deformed by impregnation of liquid and force applied by a user's mouth when the user is drinking the liquid through the dispensing window 3. The reinforcing ribs are bump in an evenly spaced arrangement. Alternatively, the reinforcing ribs 7 can be in the form of creases or a wavy structure to achieve the same effect.

The shape of the lid body 1 shown in FIG 1 is a disc. Alternatively, shape of the lid body 1 shown in FIG 1 can be made rectangular, square, or any of other shapes other than a disc. The lid body 1 shown in FIG 1 can also be irregularly shaped.

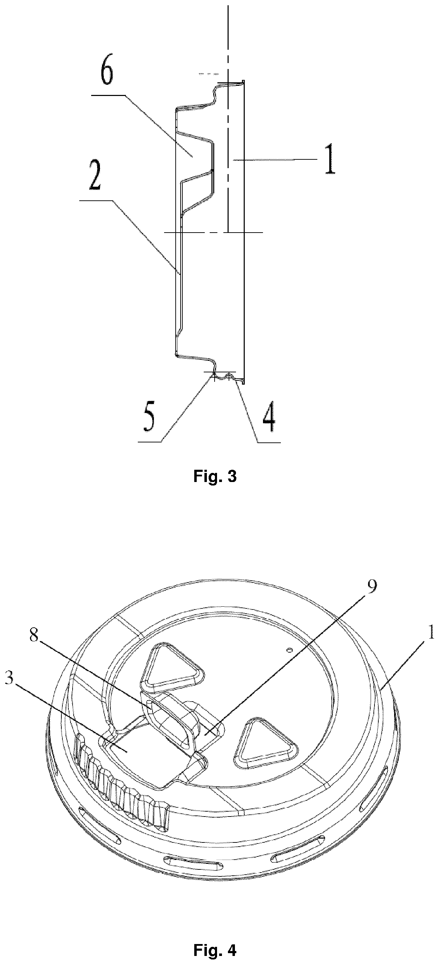

Referring to FIG. 4, a cup lid for a container in accordance with a second embodiment of the present invention is shown. The characteristics of the second embodiment are substantially the same as that of the first embodiment except the following:
The concave groove is eliminated. An window 3 is provided on a top. A clamshell 8 is hingedly secured to an edge of the window 3. A well 9 is provided adjacent to both the clamshell 8 and the window 3. In a ready to dispense state, the clamshell 8 is pivoted to expose the window 3 and temporarily fastened in the well 9. To the contrary, in a storage state the clamshell 8 is pivoted in an opposite direction to close the window 3.

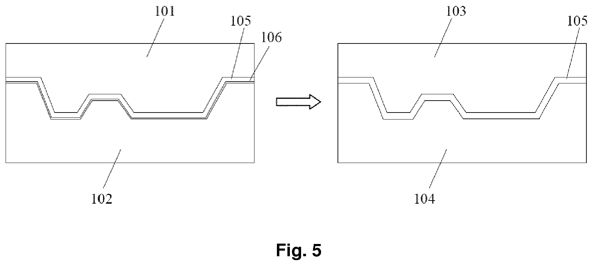

Referring to FIG. 5, a process of manufacturing a pulp moulded cup lid in accordance with the invention is illustrated. The process comprises the following steps:
(1) Plant fibers are diluted to make pulp slurry, concentration of the pulp can be 4-6‰ or other appropriate percentage;
(2) The pulp slurry is filled into a forming mould (blank die) 102 with filtering screen 106 for vacuum adsorption moulding to form a blank 105. The blank has a water content of 65-75 wt %;
(3) As illustrated in FIG. 5, a transfer mould (blank punch) 101 at temperature of 160-180°C is brought onto the forming mould (blank die) 102 for 2-5 seconds without exerting pressure. The purpose is to bake the blank 105 to cause slight contraction on the blank surface contacting the transfer mould (blank punch) 101. This step will enhance the strength of the fiber structure on that surface to prevent the blank from fracturing under an abruptly applied pressure. Then, a pressure up to 27-40N/cm² (calculated from horizontal projected area of the blank) is applied on the closed moulds (blank punch and blank die) for 8-20 seconds to drain water out from the blank. In the meantime, this process let the transfer mould (blank punch) 101 to dry preliminarily the surface of the blank. After this process of pressing and predrying, the blank has a water content of 50-55% while the side of the blanking contacting the filtering screen has a water content of 58-65%.
   Because this process heating the blank from one single side, the water content varies in different paper layers of the blank. If water content of the side of the blank contacting the filtering screen is too low, the network pattern left by the screen cannot be removed and will be left on the surface of that side. However, if water content is too high on the side of contacting the filtering screen, the subsequent high temperature pressing process applied on the blank can cause a large amount of water vapor, and therefore, a big pressure between the blank and the mould. This will result in separation of paper layers in the final product and even a blank explosion. Advantageously, the above drawbacks have been eliminated in the above described step in this invention;
(4) The blank is moved into a thermoforming drying mould with the upper mould (blank punch) 103 and lower mould (blank die) 104 at a temperature between 160°C and 180°C. The set is closed without exerting pressure for 2-8 seconds. Then, pressure up to 80-120N/cm² is applied for 30-45 seconds. Thereby, a finished pulp moulded cup lid is produced.

After predried through the step 3, plant fibres in the blank have been adsorbed strongly onto the blank. A large amount of water has been removed under pressure and predrying. It is therefore in the thermoforming process of the step 4 unnecessary to use filtering screen to drain out the water, which avoids leaving a network pattern on the surfaces of the pulp moulded cup lids. In the step 4 above, the moulding pressure applied is 80-120N/cm².

As a marked contract to this process, the maximum moulding pressure applied in the other existing techniques and processes of manufacturing pulp moulded food packaging products is not higher than 50N/cm². The reason for this difference is that in the other existing processes thickness of products is normally between 0.55mm and 0.65mm. Because metal filtering screen is used in those processes, higher mould pressure will not only leave reticulated surface on the side of the products contacting the filtering screen, but also the opposite side can be marked with black network pattern in the process of heating and pressing. Meanwhile, the filtering screen can also sink deep to the blanks and cause weakening of the strength of the blanks. This defect can cause leakage when containers made in such process containing liquid. As no filtering screen used in the above step 4, mould pressure can be increased to 80-120 N/cm², which increased greatly density of the blank. Therefore, the overall strength and stiffness of cup lid has been improved remarkably, which makes it easier to set the bump-like reinforcing ribs and the clamshell style cover over the dispensing window.

The existing techniques and processes uses filtering screen in the stage of high pressure forming. Under high pressure, the filtering screen (usually stainless steel screen) could break at small angles or concave corners of products. This drawback limited design of shape of cup lids. Because in this invention no filtering screen used in the stage of high pressure forming, there is no such limit on product design. The designs of cup lids can meet more functional and aesthetic requirements.

### Example I:

In the above described step (2), the blank has a water content of weight percentage of 70 wt % after the filtering and vacuum forming. In the step (3), the transfer mould (blank punch) is at the temperature of 170°C the transfer mould (blanking punch) 101 closes onto the forming mould (blanking die) 102 for 3 seconds with no pressure exerted. Pressure is then exerted on the blank 105 up to 33N/cm² for 15 seconds. The blank 105 has a water percentage of 52 wt % and the surface of the blank 105 contacting the filtering screen 106 has a water percentage of 59 wt %. In the step (4), the temperature of both upper and lower moulds is 170 °C. The upper mould (blanking punch) 103 closes onto the lower mould (blanking die) 104 without exerting pressure for 3 seconds. Then, pressure exerted on the blank 105 is 97N/cm² and lasts for 38 seconds. The finished cup lid has a thickness of 0.55mm and a paper density of 0.78g/cm³.

### Example II:

In the above described step (2) the blank has a water content of 68 wt % after the filtering vacuum forming. In the step (3), the transfer mould (blanking punch) is at temperature of 168°C and the blanking punch 101 closes onto the blanking die 102 for 2 seconds with no pressure exerted. Then, pressure up to 40N/cm² is exerted on the blank 105 for 10 seconds. The blank 105 has a water percentage of 50 wt % and the surface of the blank 105 contacting the filtering screen 106 has a water percentage of 58 wt %. In the step (4), the temperature of upper and lower moulds is 168 °C. The upper mould (blanking punch) 103 closes onto the lower mould (blanking die) 104 without exerting pressure for 2 seconds. Pressure up to 92N/cm² is then exerted on the blank 105 and lasts for 30 seconds. The finished cup lid has a thickness of 0.52mm and a paper density of 0.79g/cm³.

### Example III:

In the above described step (2), the blank has a water content of 72 wt after the filtering and vacuum forming. In the step (3), the temperature of the transfer mould (blanking punch) is 172°C, and the blanking punch 101 closes onto the blanking die 102 for 4 seconds with no pressure applied. Pressure up to 27N/cm² is then exerted on the blank 105 for 18 seconds. The blank 105 has a water percentage of 53 wt % and the surface of the blank 105 contacting the filtering screen 106 has a water percentage of 63 wt %. In the step (4), the temperature of both upper and lower moulds is 180 °C. The upper mould (blanking punch) 103 closes onto the lower mould (blanking die) 104 without exerting pressure for 4 seconds. Pressure up to 90N/cm² is then exerted on the blank 105 and lasts for 45 seconds. The finished cup lid has a thickness of 0.60mm and a paper density of 0.775g/cm³.

### Example IV:

In the above described step (2), the blank has a water content of 75 wt % after the filtering and vacuum forming. In the step (3), the temperature of the transfer mould (blanking punch) is 180°C and the blanking punch 101 closes onto the blanking die 102 for 5 seconds with no pressure applied. Pressure up to 35N/cm is then exerted on the blank 105² for 20 seconds. The blank 105 has a water percentage of 55 wt % and the surface of the blank 105 contacting the filtering screen 106 has a water percentage of 65 wt %. In the step (4), the temperature of both upper and lower moulds is 175 °C. The upper mould (blanking punch) 103 closes onto the lower mould (blanking die) 104 without exerting pressure for 8 seconds. Pressure up to 88N/cm² is then exerted on the blank 105and lasts for 42 seconds. The finished cup lid has a thickness of 0.58mm and a paper density of 0.785g/cm³.

### Example V:

In the above described step (2), the blank has a water content of 65 wt %after the filtering and vacuum forming. In the step (3), the temperature of the transfer mould (blanking punch) is 160°C and the blanking punch 101 closes onto the blanking die 102 for 3 seconds with no pressure applied. Pressure up to 33N/cm² is exerted on the blank 105 for 8 seconds. The blank 105 has a water percentage of 50 wt % and the surface of the blank 105 contacting the filtering screen 106 has a water percentage of 60 wt %. In the step (4), the temperature of both upper and lower moulds is 164 °C. The upper mould (blanking punch) 103 closes onto the lower mould (blanking die) 104 without exerting pressure for 2 seconds. Pressure up to 100N/cm² is then exerted on the blank 105 and lasts for 35 seconds. The finished cup lid has a thickness of 0.56mm and a paper density of 0.80g/cm³.

Cup lids manufactured through the method of this patent application has fine, smooth, non-reticulated inner and outer surfaces. No paper fiber separates from either the surface contacting liquid or the dispensing window contacting with user lips. Because appropriate techniques, equipments and mould matching are adopted during the manufacturing process, the blank of the pulp moulded cup lid is guaranteed to possess reasonable water content in its various paper layers during each stage of pressing, draining, drying, and forming. In this patent application, adoption of higher pressure in pulp moulding process than the generally used processes makes final product of pulp moulded cup lids having non-reticulated surfaces, tighter binding between paper fibers, and a high paper density of 0.77∼ 0.8g/cm³, which reinforce solidarity and strength of product body, especially the strength of bucking projections. The high density pulp moulded cup lids are not to be easily damped and deformed in an environment of high humidity.

While the patent application has been described in terms of preferred embodiments, those skilled in the art will recognize that the patent application can be practiced with modifications within the scope of the appended claims.

## Claims

1. A pulp moulded cup lid, the cup lid having smooth, non-reticulated inner and outer surfaces, comprising:
a lid body (1) having smooth, non-reticulated inner and outer surfaces;
a sealing skirt (4) axially extending downward the lid body; and
a plurality of buckling projections (5) disposed evenly and circumferentially on an inner surface of a lower portion of the sealing skirt (4);
a dispensing window (3); a convex platform (2) set along the circumferential direction on the outer periphery of the lid body (1);
**characterized in that**
the dispensing window (3) is set on the convex platform (2) and the cup lid has a paper density of 0.77-0.8 g/cm³.

2. The pulp moulded cup lid of claim 1, wherein a number of the buckling projections (5) is 8-16.

3. The pulp moulded cup lid of claim 1, wherein the buckling projections (5) are elongated ribs protruding inward the sealing skirt (4).

4. The pulp moulded cup lid of claim 3, wherein each of the elongated ribs has a projection height of 1.5 to 2.0 mm.

5. The pulp moulded cup lid of claim 1, further comprising a plurality of reinforcing ribs (7) which are set on an outer surface of the dispensing window (3) of the lid body (1).

6. The pulp moulded cup lid of claim 5, wherein the reinforcing ribs (7) are bump in an evenly spaced arrangement.

7. The pulp moulded cup lid of claim 1, wherein the dispensing window (3) is either open or provided with a clamshell type cover.

8. The pulp moulded cup lid of claim 7, wherein the lid body (1) further comprises a concave groove (6) disposed adjacent to the dispensing window (3).

9. A method of manufacturing a pulp moulded cup lid according to one of claims 1 to 8, the method comprising the following steps:
(1) diluting plant fibers in water to make a pulp slurry;
(2) filling the pulp slurry into a forming mould (102) with a filtering screen (106) for vacuum absorption moulding to become a blank (105), wherein the blank has a water content of 65-75 wt %;
(3) closing a transfer mould (101) at temperature of 160-180 °C and the forming mould to form a closed mould set with no pressure exerted on the blank for 2-5 seconds; then applying a pressure up to 27-40N/cm² on the blank through the closed mould set for 8-20 seconds; wherein when this step is completed, the blank has a total water content of 50-55 wt %, while a side contacting the filtering screen has a water content of 58-65 wt %; and
(4) moving the blank into a set of heat setting drying moulds with upper and lower moulds (103, 104) at temperature of 160-180 °C; closing the two moulds together with no pressure applied for 2-8 seconds; then, applying a pressure of up to 80-120N/cm² on the blank for 30-45 seconds.

10. The method of claim 9, wherein:
in step (2), the blank has a 70 wt % water content;
in step (3), the transfer mould (101) has a temperature of 170 °C and the two moulds are closed together for 3 seconds with no pressure exerted; then, a pressure of up to 33 N/cm² is applied on the blank for 15 seconds; the resulting blank has a total water content of 50-55 wt %, while the side contacting the filtering screen has the water content of 58-65 wt %;
in step (4), the temperature of the upper and lower moulds is 170 °C; the two moulds are closed together with no pressure applied for 3 seconds, then, a pressure of up to 97N/cm² is applied on the blank for 38 seconds.

## Patentansprüche

1. Aus Zellstoff geformter Becherdeckel, wobei der Becherdeckel eine glatte, nicht netzähnliche innere und äußere Oberfläche aufweist, umfassend:
einen Deckelkörper (1), der eine glatte, nicht netzähnliche Innere und äußere Oberfläche aufweist;
einen Versiegelungsrand (4), der sich axial den Deckelkörper hinunter erstreckt; und
mehrere ausgebeulte Vorsprünge(5), die gleichmäßig und im umlaufend auf einer inneren Oberfläche eines unteren Abschnitts des Versiegelungsrands (4) angeordnet sind;
ein Ausgabefenster (3);
eine konvexe Plattform (2), die entlang der Umfangsrichtung auf der äußeren Peripherie des Deckelkörpers (1) angeordnet ist;
**dadurch gekennzeichnet, dass**
das Ausgabefenster (3) auf der konvexen Plattform (2) angeordnet ist und der Becherdeckel eine Papierdichte von 0,77-0,8 g/cm³ aufweist.

2. Aus Zellstoff geformter Becherdeckel nach Anspruch 1, wobei eine Anzahl der ausgebeulten Vorsprünge (5) 8 bis 16 beträgt.

3. Aus Zellstoff geformter Becherdeckel nach Anspruch 1, wobei die ausgebeulten Vorsprünge (5) längliche Rippen sind, die in den Abdichtungsrand (4) hineinragen.

4. Aus Zellstoff geformter Becherdeckel nach Anspruch 3, wobei jede der länglichen Rippen in einer Höhe von 1,5 bis 2,0 mm hervorragen.

5. Aus Zellstoff geformter Becherdeckel nach Anspruch 1, ferner umfassend mehrere Verstärkungsrippen (7), die auf einer äußeren Oberfläche des Ausgabefensters (3) des Deckelkörpers (1) angeordnet sind.

6. Aus Zellstoff geformter Becherdeckel nach Anspruch 5, wobei die Verstärkungsrippen (7) Höcker in einer gleichmäßig beabstandeten Anordnung sind.

7. Aus Zellstoff geformter Becherdeckel nach Anspruch 1, wobei das Ausgabefenster (3) entweder offen ist oder mit einer Abdeckung vom Klappentyp versehen ist.

8. Aus Zellstoff geformter Becherdeckel nach Anspruch 7, wobei der Deckelkörper (1) ferner eine konkave Rille (6) umfasst, die neben dem Ausgabefenster (3) angeordnet ist.

9. Verfahren zur Herstellung eines aus Zellstoff geformten Becherdeckels nach einem der Ansprüche 1 bis 8, wobei das Verfahren die folgenden Schritte umfasst:
(1) Verdünnen von Pflanzenfasern in Wasser zur Herstellung einer Zellstoffaufschlämmung;
(2) Füllen der Zellstoffaufschlämmung in eine Formschale (102) mit einem Filtersieb (106) zur Vakuumabsorptionsformung zur Erzeugung eines Rohlings (105), wobei der Rohling einen Wassergehalt von 65-75 Gew.-% aufweist,
(3) Schließen einer Transferform (101) bei einer Temperatur von 160-180 °C und der Formschale zur Bildung eines geschlossenen Formsatzes ohne dass Druck für 2 bis 5 Sekunden auf den Rohling ausgeübt wird; danach Anwenden eines Druckes mit bis zu 27-40 N/cm² auf den Rohling durch den geschlossenen Formsatz für 8 bis 20 Sekunden; wobei, wenn dieser Schritt abgeschlossen ist, der Rohling einen Gesamtwassergehalt von 50-55 Gew.-% aufweist, wohingegen eine Seite, die den Filtersieb berührt, einen Wassergehalt von 58-65 Gew.-% aufweist; und
(4) Bewegen des Rohlings in einen Formsatz zur Hitzehärtung, mit oberen und unteren Formen (103, 104) bei einer Temperatur von 160-180 °C; Zusammenschließen der beiden Formen ohne dass für 2 bis 8 Sekunden Druck angewendet wird; danach, Anwenden eines Drucks mit bis zu 80 bis 120 N/cm² auf den Rohling für 30 bis 45 Sekunden.

10. Verfahren nach Anspruch 9, wobei
in Schritt (2), der Rohling einen Wassergehalt von 70 Gew.-% aufweist;
in Schritt (3), die Transferform (101) eine Temperatur von 170 °C aufweist und die zwei Formen so 3 Sekunden lang zusammen geschlossen werden, dass kein Druck ausgeübt wird; danach wird ein Druck von bis zu 33N/cm² 15 Sekunden lang auf den Rohling ausgeübt; der resultierende Rohling weist einen Gesamtwassergehalt von 50-55 Gew.-% auf, wobei die Seite, die den Filtersieb berührt, den Wassergehalt von 58-65 Gew.-% aufweist;
in Schritt (4), die Temperatur der oberen und unteren Formen 170°C beträgt, wobei die zwei Formen so 3 Sekunden lang zusammen geschlossen werden, dass kein Druck ausgeübt wird; danach wird ein Druck von bis zu 97N/cm² 38 Sekunden lang auf den Rohling ausgeübt.

## Revendications

1. Couvercle de tasse moulé dans de la pulpe, le couvercle de tasse ayant des surfaces intérieure et extérieure lisses non réticulées, comprenant :
un corps de couvercle (1) présentant des surfaces intérieure et extérieure lisses non réticulées ; et
une jupe d'étanchéité (4) s'étendant axialement vers le bas du corps de couvercle ; et
une pluralité de projections gauchies (5) réparties de façon uniforme et circonférentielle sur une surface intérieure d'une partie inférieure de la jupe d'étanchéité (4) ;
une fenêtre distributrice (3) ; une plate-forme convexe (2) disposée le long de la direction circonférentielle sur la périphérie extérieure du corps de couvercle (1) ;
**caractérisé en ce que**
la fenêtre distributrice (3) est placée sur la plate-forme convexe (2) et le couvercle de tasse a une densité de papier de 0,77-0,8 g/cm³.

2. Couvercle de tasse moulé dans de la pulpe selon la revendication 1, dans lequel un nombre des projections gauchies (5) est de 8-16.

3. Couvercle de tasse moulé dans de la pulpe selon la revendication 1, dans lequel les projections gauchies (5) sont des nervures allongées faisant saillie à l'intérieur de la jupe d'étanchéité (4).

4. Couvercle de tasse moulé dans de la pulpe selon la revendication 3, dans lequel chacune des nervures allongées présente une hauteur de projection de 1,5 à 2,0 mm.

5. Couvercle de tasse moulé dans de la pulpe selon la revendication 1, comprenant en outre une pluralité de nervures de renfort (7) qui sont posées sur une surface extérieure de la fenêtre distributrice (3) du corps de couvercle (1).

6. Couvercle de tasse moulé dans de la pulpe selon la revendication 5, dans lequel les nervures de renfort (7) sont bosselées dans un agencement espacé uniformément.

7. Couvercle de tasse moulé dans de la pulpe selon la revendication 1, dans lequel la fenêtre distributrice (3) est soit ouverte, soit dotée d'un recouvrement de type coque.

8. Couvercle de tasse moulé dans de la pulpe selon la revendication 7, dans lequel le corps de couvercle (1) comprend en outre une rainure concave (6) disposée adjacente à la fenêtre distributrice (3).

9. Procédé de fabrication d'un couvercle de tasse moulé dans de la pulpe selon l'une des revendications 1 à 8, le procédé comprenant les étapes suivantes :
(1) dilution de fibres végétales dans l'eau pour faire une pâte liquide ;
(2) remplissage de la pâte liquide dans un moule de formage (102) avec un écran filtrant (106) pour le moulage par absorption sous vide pour devenir un flanc (105), dans lequel le flanc a une teneur en eau de 65-75 pourcents en poids ;
(3) fermeture d'un moule de transfert (101) à une température de 160-180°C et du moule de formage pour former un jeu de moules fermés avec aucune pression exercée sur le flanc pendant 2-5 secondes ; puis application d'une pression allant jusqu'à 27-40 N/cm² sur le flanc à travers le jeu de moules fermés pendant 8-20 secondes ; dans lequel lorsque cette étape est terminée, le flanc a une teneur en eau totale de 50-55 pourcents en poids tandis qu'un côté en contact avec l'écran de filtrage a une teneur en eau de 58-65 pourcents en poids ; et
(4) déplacement du flanc dans un jeu de moules de séchage à prise par chaleur avec des moules supérieur et inférieur (103, 104) à une température de 160-180°C ; fermeture des deux moules ensemble avec aucune pression appliquée pendant 2-8 secondes ; puis, application d'une pression allant jusqu'à 80-120 N/cm² sur le flanc pendant 30-45 secondes.

10. Procédé selon la revendication 9, dans lequel :
à l'étape (2), le flanc a une teneur en eau de 70 pourcents en poids ;
à l'étape (3), le moule de transfert (101) a une température de 170°C et les deux moules sont fermés ensemble pendant 3 secondes avec aucune pression exercée ; puis, une pression allant jusqu'à 33 N/cm² est appliquée sur le flanc pendant 15 secondes ; le flanc qui en résulte a une teneur en eau totale de 50-55 pourcents en poids tandis que le côté en contact avec l'écran de filtrage a une teneur en eau de 58-65 pourcents en poids ;
à l'étape (4), la température des moules supérieur et inférieur est de 170°C ; les deux moules sont fermés ensemble avec aucune pression exercée pendant 3 secondes, puis, une pression allant jusqu'à 97 N/cm² est appliquée sur le flanc pendant 38 secondes.
